# EUROPEAN PATENT APPLICATION

(11) **EP 2 380 935 A1**
(43) Date of publication of application: **26.10.2011**
(21) Application number: 11305450.6
(22) Date of filing: 15.04.2011
(51) Int. Cl.: C08L 95/00, C09D 195/00, E01C 7/35

(54) **Bituminous compositions**

(30) Priority: 15.04.2010 GB 1006286
(71) Applicant: Lafarge, 75782 Paris (FR)
(72) Inventor: Harris, John, Claybrooke Magna Leicestershire LE17 5DT (GB); Bridges, Martin, Coalville, Leicestershire LE67 5PU (GB); Gossling, Robert, Derby DE56 4FW (GB); Wheeldon, Peter, Middlesborough TS5 7NF (GB); Edwards, Paul, Sherwood, Nottinghamshire NG5 3DJ (GB)
(74) Representative: Coret, Sophie V.G.A.

(57) **Abstract**

The invention provides a bituminous composition comprising bitumen, aggregate and fines, which fines are from the calcination of dolomite.

## Description

This invention relates to bituminous compositions comprising a by-product from the calcination of dolomite.

Dolomite is a sedimentary carbonate rock comprising mainly the mineral dolomite [CaMg(CO₃)₂]. Rocks comprising 10 to 50% of dolomite are called dolomitic. Most dolomite has been formed by a geological dolomitisation process in which calcium in limestone [Ca(CO₃)₂] is partially replaced by magnesium.

Dolomite is calcined to produce calcium magnesium oxide (CaMg0) for use in the manufacture of steel, refractories and glass. Carbon dioxide is released from the dolomite during the calcination process. The calcination process is carried out in kilns. The process produces as a by-product a fine particulate material which is collected, for example by electrostatic precipitation, e.g. by precipitation onto charged electrodes.

The material collected which is a precipitated kiln dust, in this specification including the accompanying claims, is called "fines from the calcination of dolomite" or "fines". A limited amount has been used for blending with lime, for sale as an agricultural lime product. The remainder has heretofore presented a problem of disposal or storage.

It has now been discovered that the fines can be used in the preparation of mixtures of bitumen and aggregate. Such mixtures are known as asphalt (bituminous bound mixture). The present invention seeks to provide such mixtures having improved mechanical properties, for example increased durability.

The present invention accordingly provides a bituminous composition comprising bitumen, aggregate and fines, which fines are from the calcination of dolomite.

The composition preferably comprises 0.5 to 4%, more preferably 1 to 3%, for example about 2% of fines.

The fines are generally a complex mixture which comprises, for example,
calcium magnesium carbonate (CaMg(CO₃)₂, dolomite);
calcium magnesium oxide (CaO•MgO);
calcium oxide (CaO); and/or
magnesium oxide (MgO).

The fines may comprise, for example,
60% or more, preferably 40% or more, of calcium magnesium carbonate;
15 to 60%, for example 15 to 40%, of calcium magnesium oxide;
15 to 40% of calcium oxide; and/or
15 to 40% of magnesium oxide; other compounds may also be present in smaller amounts.

The fines preferably comprise: Mg0 25 to 40%; Ca0 45 to 60%; Fe₂0₃ 0.5 to 7%, for example 0.5 to 4.0%; and/or S 1 to 6%; other elements may also be present in smaller amounts.

After collection from the kiln the fines used in the compositions of the invention are preferably protected from water, for example by bagging or tankering. Such protection serves, for example, to reduce possible hydrolysis of calcium and magnesium oxides (although magnesium oxide is less susceptible to hydrolysis) to form the corresponding hydroxides.

In this specification including the accompanying claims percentage analysis figures are as determined by X ray fluorescence (XRF) spectrometry using a Panalytical XRF AXIOS machine and standard samples to permit quantitative analysis. This procedure is used by Ceram Research Ltd, Stoke on Trent, England, under UKAS Accreditation No. 0013 and inaccordance with XRF Test Document No. C201

It will be understood that, because of the mixture of compounds in the fines, their physicochemical properties differ substantially from those of calcined dolomite itself.

The loss on ignition (LOI) of the fines at 1000°C is preferably 20 to 30%. The procedure for determining LOI is carried out in accordance with BS EN 1744-1 (1998).

The granulometry of the fines by sieving (sieve aperture in mm: percentage of material passing through the sieve) is preferably: 0.5 mm 100%; 0.3 mm 98 to 100%; 0.25 mm 97 to 100%; 0.125 mm 90 to 100%; and 0.063 mm 65 to 80%. The grading is measured in accordance with the procedure of BS EN 933-1 (1997).
The density of the fines, measured in kerosene in accordance with the procedure of BS EN 10973 (1998) is preferably 0.5 to 0.9 Mg/m³.

The fines material is preferably Doloflour, which is produced at two sites in the UK (Whitwell Quarry and Thrislington Quarry), more preferably Doloflour (Trade name) from the Whitwell quarry (which is also known as Whitwell Doloflour Limestone filler aggregate).

The fines material preferably has a pH of 10 to 11 measured in accordance with known procedures. The fines material is preferably angular in shape.

The fines from the calcination of dolomite may be used in association with other finely divided particulate material including, for example, pulverised fly ash and/or gypsum (also known as selenite.)

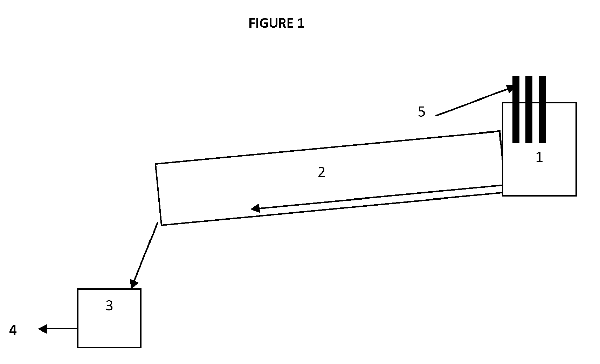

A typical kiln for the calcination of dolomite (and which generates fines which are collected) is shown in Figure 1 in which: dolomite is introduced into a preheater (1) and then passes into a rotating cylindrical calcining kiln (2); the dolomite moves through the kiln in the direction of the arrow. Calcined material exits the kiln and passes to an air cooler (3) where the calcined dolomite is cooled and collected (4). The temperature at the point of entry into the kiln (2) is about 900°C; the temperature at the other end of the kiln where calcined material exits the kiln (2) is about 1800°C. The kiln is heated by the combustion of pulverised coal in air; a stream of hot air enters the kiln at the end remote from the preheater (1) and passes towards the preheater. Dust generated during calcination in the rotating kiln (2) is entrained by the hot air stream and is precipitated on electrodes (4). The fines material is removed from the electrodes and collected.

The type of bitumen used in the compositions of the invention depends on the intended use of the bituminous composition. The bitumen is generally paving grade bitumen complying with BS EN 12591: 2000. Such bitumen is generally a penetration grade bitumen.

Penetration grade bitumens are specified by penetration and softening point tests. Penetration values are measured in accordance with the procedure of BS EN 1426: 2000: penetration values are measured at 25°C in units of 0.1mm (the units are not generally quoted in penetration grades). It will be understood that the higher the penetration grade, the softer the bitumen. Softening point testing is carried out in accordance with the procedure of BS EN 1427:2000.

Specifications for paving grade bitumens for use in the compositions of the invention may include: 10/20, 15/25, 20/30 (55-63°C); 30/45 (52-60°C); 35-50 (50-58°C); 40/60 (48-56°C); 50-70 (46-54°C); 70/100 (43-51°C); 100/150 (39-47°C); 160/220 (35-43°C); or 250-330 (30-38°C). The temperatures in parenthesis are the softening points for each grade. The stiffer grades, for example 10/20 and 15/25, are suitable for surfaces subject to heavy traffic, such as motorways. Grades 10/20 and 15/25 are preferably in accordance with BS EN 13924 part 1.

The compositions of the invention generally comprise from 2 to 10%, preferably from 3 to 7%, more preferably about 4% of bitumen.

The bitumen may comprise a polymer (polymer modified bitumen) and/or natural or synthetic fibres.

The polymers comprise polymers and copolymers and include thermoplastic rubber (TR), styrene-butadiene-styrene (SBS) and ethylene-vinyl acetate (EVA).
The polymer modified bitumens are preferably in accordance with BS EN 14023:2005.

The preferred grade of EVA for bitumen modification, for road pavement materials, has the classification "150/19". This material has a melt flow index of 150 and a vinyl acetate content of 19%.

The amount of polymer or copolymer is generally 2 to 8%, for example about 5% by weight.

Fibres for inclusion in bitumen include cellulose, mineral, glass and polyester fibres. The amount of fibres in the bitumen is generally less than or equal to 1% by weight.

Additives for use in bitumen include: viscosity modifiers, for example low molecular weight polyethylene, paraffin wax or sulphur to reduce the viscosity; oil may also be used to extend workability time; stiffening agents such as cement, usually used in an amount of 1 to 2% by weight relative to the bitumen; and colouring agents.

The aggregates used in the compositions of the invention may, for example, be basic or acidic. Aggregates suitable for use in the compositions of the invention include:
(i) Naturally occurring materials, such as crushed rock aggregates from sedimentary rock which is generally hard, dense and cemented (for example limestones and sandstones), metamorphic rock which is generally tough and crystalline (for example quartzite) and igneous rocks (for example granite and basalt). Limestone for use in road pavements includes dolomite and dolomitic rocks.
(ii) Industrially produced material such as blast furnace slag.
(iii) Recycled aggregates including crushed concrete, bricks or glass, asphalt planings (i.e. the surface layers of roads removed during roadworks) and spent railway ballast.

The aggregate used in the compositions of the invention preferably complies with BS EN 13043.

The aggregate used in the compositions of the invention is preferably resistant to fragmentation. A test method for the determination of the Los Angeles Coefficient (LA) is described in BS EN 1097 Part 2. The lower the coefficient the more resistant the tested aggregate is to fragmentation. The test result is expressed as a category, for example LA 50, where the number represents the maximum value of the coefficient for the material tested.

Aggregate from naturally occurring materials used in the compositions of the invention preferably has a Los Angeles coefficient less than or equal to 50, more preferably less than or equal to 30. Aggregate from blast furnace slag preferably has a Los Angeles coefficient less than or equal to 50.

When the bituminous mixture is to be used as a surface course a coarse aggregate complying with category PS₄₄ in accordance with BS EN 13043 is preferable.

The compositions of the invention generally comprise from 86 to 97.5%, preferably from 90 to 95%, more preferably about 94% of aggregate.

The aggregate preferably comprises not more than 15% of fines (including the fines from the calcination of dolomite).

The bituminous compositions according to the invention preferably have a Saturation Ageing Tensile Stiffness (SATS) durability index of 80% or more. The SATS index is determined by a procedure carried out on test specimen cores of about100mm diameter and about 60mm thickness cored from a slab manufactured using a laboratory roller compacter in accordance with BS EN 12697-33 to a void content of 8% ± 2%. The slab is produced using the recipe for the bituminous mixture to be tested except that a standard 10/20 penetration grade binder complying with Transport Research Laboratory (TRL) Report TRL 636 Annex A is substituted. Five nominally identical specimens are required for the full test. The cores are obtained by sawing approximately equal amounts from each end of the core taken from the slab which should be approximately 100mm thick. Details of the SATS test are given in the UK MANUAL OF CONTRACT DOCUMENTS FOR HIGHWAY WORKS, VOLUME 1, SPECIFICATION FOR HIGHWAY WORKS, SERIES 900, ROAD PAVEMENTS - BITUMINOUS BOUND MATERIALS (Clause 953, page 41) as amended, November 2008. The SATS test may also be modified by replacing the standard 10/20 penetration grade binder described above with the bitumen actually used in the bituminous composition to be tested. The results obtained then reflect more closely the properties of the bituminous compositions of the invention.

The invention also provides a method for the manufacture of a bituminous composition which comprises mixing bitumen, aggregate and fines from the calcination of dolomite.

The bituminous mixtures of the invention can be prepared using conventional plant. Known processes for the preparation of bituminous mixtures include the "hot", "warm", "half-warm" (or "semi-warm") and "cold" processes.

In the hot process both the aggregate and the bitumen are heated before mixing. The aggregate may be pre-dried or not. The hot process generally uses temperatures from 120°C to 190°C

In the warm process the aggregate is heated to a lower temperature than in the hot process, generally about 130°C, and the bitumen is heated, generally to a temperature of 100°C to 140°C, before mixing. The viscosity of the mixture is reduced by rheology modification, generally using organic additives.

In the half-warm process a bitumen emulsion or foamed bitumen is used. The bitumen emulsion or foamed bitumen have reduced viscosity. A temperature of 70°C to 100°C is generally used.

In the cold process an aqueous emulsion of bitumen is mixed with aggregate at ambient temperature. In a preferred embodiment of the invention the fines from the calcination of dolomite may be used in association with other finely divided particulate material including, for example, pulverised fly ash and/or gypsum. The bitumen used in the cold process may be, for example, 100/150 grade.

The aqueous emulsion used in the half-warm or cold process generally comprises a cationic or anionic emulsifying agent.

Preferably the solid aggregate and solid fines are first mixed and the mixture of solids obtained is then mixed with the bitumen.

It will be understood that the bituminous compositions obtained by the cold process also comprise water from the aqueous emulsion. The emulsion is generally broken, and the water expressed, when the compositions are laid. After laying the composition is generally compacted, for example by rolling.

The bituminous compositions according to the invention may be used, for example, in the construction of pavements, e.g. road pavements, footways and car or lorry parks. Such constructions generally comprise a plurality of layers. The layers can include:
a wearing course (now generally referred to as a surface course);
a base course (now generally referred to as a binder course) below the surface course;
a roadbase (now generally referred to as a base) below the binder course;
a sub-base below the roadbase;
a capping layer below the sub-base; and
a subgrade below the capping layer.
The number of layers and the materials used depend, *inter alia,* on the anticipated traffic and loadings which must be supported.

The subgrade is a layer of naturally occurring material upon which the construction is built. It can also refer to a fill material used to create, for example, an embankment on which the construction is to be built.

The bituminous compositions of the invention can be used to form one or more of the surface course, the binder course, the roadbase and the sub-base. One or more of the surface course, the binder course and the roadbase preferably comprise a bituminous composition according to the invention. It will be understood that the bituminous compositions in different courses can be the same or, preferably, different.

The bituminous composition of the invention for use in a surface course preferably comprises penetration grade bitumen, optionally also comprising a polymer or copolymer and/or fibres as hereinbefore described.

The aggregates used can be defined in terms of sieve sizes. Standard sieves used include those having mesh sizes of 4mm, 6.3mm (sometimes referred to as a 6mm sieve), 8mm, 10mm, 14mm, 16mm, 20mm and 31.5mm. The maximum size of an aggregate is generally taken as the smallest sieve through which all of the aggregate sample particles will pass. The nominal maximum size is generally taken as the largest sieve that retains some of the aggregate particles but generally not more than 10% by weight. The aggregate used in the compositions of the invention generally having a maximum size or nominal maximum size from 4mm to 31.5mm ( for example 4mm, 6mm, 8mm, 10mm, 14mm, 16mm, 20mm or 31.5mm). Aggregate having a maximum size or a nominal maximum size of 4mm, 6mm, 10mm, 14mm, 20mm or 31.5mm are preferably used in the compositions of the invention. For a surface course the compositions generally comprise aggregate having a maximum size or nominal maximum size from 4mm to 20mm ( for example 4mm, 6mm, 8mm, 10mm, 14mm, 16mm or 20mm) and preferably comprise a 6mm aggregate (the particles of which will all pass through a 6mm sieve) or a 10mm aggregate (the particles of which will all pass through a 10mm sieve). Aggregates having a nominal size of 6 or 10mm can also be used. The bitumen used is preferably penetration grade 100/150 or 70/100.

Aggregate used in bituminous compositions for the binder course generally comprise aggregate having a maximum size or nominal maximum size from 4mm to 20mm (for example 4mm, 6mm, 8mm, 10mm, 14mm, 16mm or 20mm) and preferably comprise aggregate of 20mm nominal size or nominal maximum size.

Aggregate used in bituminous compositions for the base course generally comprise aggregate having a maximum size or nominal maximum size from 4mm to 20mm (for example 4mm, 6mm, 8mm, 10mm, 14mm, 16mm, 20mm or 28mm) and preferably comprise aggregate of 28mm nominal size or nominal maximum size.

The aggregate used in the invention may comprise a 0/4 aggregate: this includes coarse aggregate (particle size from 2 mm to 4 mm, fine aggregate (particle size greater than 0.063 and less than 2mm) and fines having a particle size generally less than 0.063mm. The aggregate used in the invention generally comprises 20 to 40% content of fine aggregate.

In a preferred construction the surface course comprises a porous bituminous composition according to the invention: the surface course preferably comprises aggregate of 10mm nominal maximum size; the binder course preferably comprises aggregate of 20mm nominal maximum size; and/or the base comprises aggregate of 28mm nominal maximum size.

The bituminous surface course is preferably laid on a water-permeable binder course. The water-permeable binder course is preferably laid on a porous foundation layer.

It is thought that the improvement in the mechanical properties of the bituminous compositions of the invention is achieved by the interaction between the fines and the mix aggregates which strengthens the bond between the bitumen and the aggregate and also by an increase in the viscosity of the bitumen binder thereby increasing resistance to moisture susceptibility or damage.

The invention also provides: a bituminous composition according to the invention in shaped form, for example as a layer in a pavement; and
a road pavement comprising a bituminous composition according to the invention.

In this specification, including the accompanying claims it is to be understood that:
the term "dolomite" embraces dolomite and dolomitic rocks;
percentages, unless otherwise specified, are by weight;
the bituminous compositions of the invention comprise materials known in the UK as bituminous bound mixtures, asphalt and asphalt concrete (formerly known as macadam);
the term "pavement" embraces a load-bearing surface comprising a plurality of layers for use by, for example pedestrians, and vehicles such as cars and lorries;
the term aggregate embraces both coarse aggregate having a particle size greater than or equal to 2mm and fine aggregate having a particle size greater than 0.063mm and less than 2mm (fine aggregate is retained on a 0.063mm sieve)

The following non-limiting Example illustrates the invention.

### EXAMPLE

A bituminous composition is prepared by mixing (in parts by weight):

| | |
|---|---|
| bitumen | : 4 |
| aggregate (dried) | : 94 |
| fines from the calcination of dolomite | : 2 |

The bituminous composition prepared comprises 2% of fines.

The bitumen is penetration grade 40/60 with a softening point of 48 to 56°C.

The aggregate is crushed and screened limestone with a nominal size of 10mm and having a Los Angeles coefficient of 30.

The fines from the calcination of dolomite are from the Whitwell Quarry in the UK.

The aggregate is heated to 190°C then mixed with the Doloflour; the hot mixture is then mixed with bitumen previously heated to a temperature of about 170°C.

The resulting bituminous mixture is tested using the modified SATS procedure described above (in which the standard 10/20 grade bitumen is replaced by the bitumen used in this Example) and has a durability index of more than 80%.

## Claims

1. A bituminous composition comprising bitumen, aggregate and fines, which fines are from the calcination of dolomite.

2. A composition according to claim 1 in which the fines are Doloflour from the Whitwell Quarry (UK).

3. A composition according to claim 1 or 2 in which the bitumen is a penetration grade bitumen.

4. A composition according to any one of the preceding claims in which the aggregate has a Los Angeles Coefficient of 30 or less.

5. A composition according to any one of the preceding claims which is a porous asphalt.

6. A composition according to any one of the preceding claims in which the bitumen comprises a polymer, copolymer and/or natural or synthetic fibres.

7. A process for the manufacture of a bituminous composition according to any one of claims 1 to 6 which comprises mixing bitumen, aggregate and fines from the calcination of dolomite.

8. A bituminous composition according to any one of claims 1 to 6 in shaped form.

9. A pavement comprising a bituminous composition according to any one of claims 1 to 6
